# EUROPEAN PATENT APPLICATION

(11) **EP 1 884 452 A1**
(43) Date of publication of application: **06.02.2008**
(21) Application number: 07113470.4
(22) Date of filing: 31.07.2007
(51) Int. Cl.: B62D 25/20, B62D 33/06, B62D 65/02, B62D 27/02

(54) **Manufactured product comprising a box-type structure for a vehicle frame and the relevant method of production**

(30) Priority: 01.08.2006 IT MI20061526
(71) Applicant: IVECO S.p.A., 10156 Torino (IT)
(72) Inventor: Giovine, Mauro, 10090 Castiglione Torinese (IT)
(74) Representative: Borsano, Corrado

(57) **Abstract**

Manufactured product comprising a first (11, 11') and a second (12, 12') plate, partially overlapping and joined together in the area (13) in which they overlap, characterized in that at least said first plate is provided, in the overlapping area (13), with a portion (14) that is formed so as to create, in cooperation with the second plate a box-type structure.
Method of production of the manufactured product described above.

## Description

### FIELD OF THE INVENTION

The present invention relates to a manufactured product comprising a box-type structure for a vehicle frame, in particular a floor or wall of a cab for a truck, but also of a passenger compartment for a motor-car, bus, train carriage, etc.

### PRIOR ART

In the construction of motor vehicles, and in particular of trucks, but also of motorcars, buses, train carriages, etc., some parts of the cab or passenger compartment, in particular the floor, but also the walls, are generally made using metal plate of an appropriate thickness, if necessary formed and then welded together; the plates are welded along their edges, which are made to overlap for a given width. One welding technique that is frequently used is spot welding, which has the advantage of being cheap and fast and also makes it possible to detach and re-join the plates easily if necessary for maintenance or to replace parts. However other welding techniques can be used.

Given the thinness of the plate, the parts obtained in this way may require some reinforcement; the floor of a cab or passenger compartment must be reinforced to withstand the weight of the people and to allow the seats and safety belts to be anchored to the floor. As for the walls of the cab or passenger compartment, these must mainly withstand aerodynamic loads without vibrating.

One method that is frequently used to produce said reinforcements consists of creating a box-type structure, where reinforcements (basically channel sections) are welded to one face of the plate (for example the face that will constitute the underside of the floor) by means of flaps on the side edges of the section bar and with the concave part towards the plate, so as to form with said plate a sort of tube-shaped or box-shaped section, that may also be used to carry cables or the like.

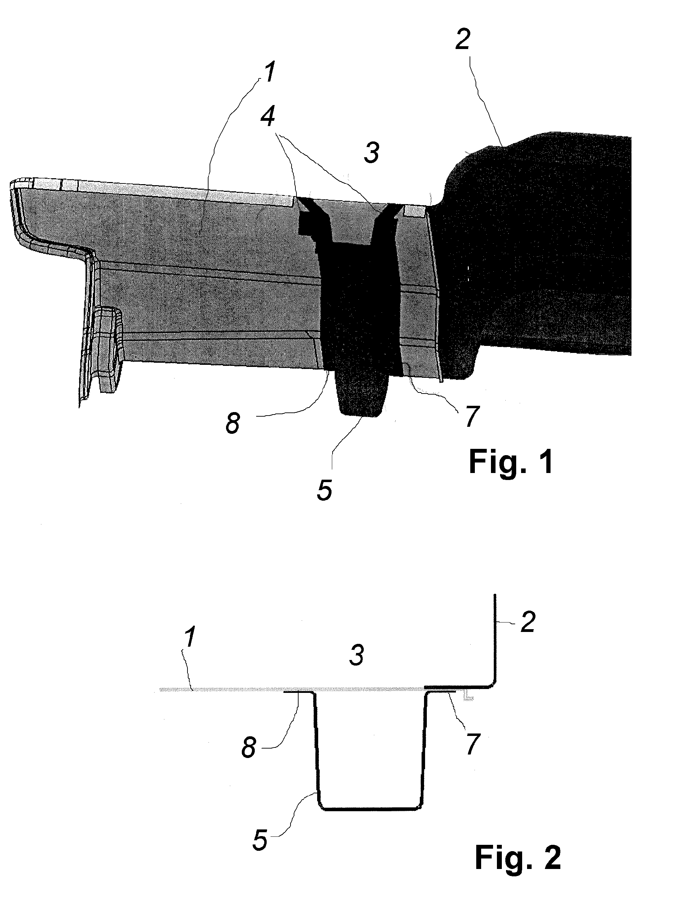

Said reinforcements often have to be welded close to the joint between the two plates, arranged parallely to said joint. A typical example is the floor of the cab of a truck. With reference to figure 1, showing a view from the bottom of part of the floor, and figure 2, showing a cross-section of the joint area, it frequently comprises two formed side plates, one on the driver's side and one on the passenger's side, arranged longitudinally in the cab, between the cab suspension anchor points anteriorly and the rear wall posteriorly, joined to a central hood, also made of formed plate and arranged longitudinally which constitutes the raised central portion that divides the cab longitudinally and on which the parking brake and gear lever are usually located. The figures illustrate the joint between one of the side plates 1 and the central hood 2, in the area 3 in which they overlap, where a portion of the hood overlaps a portion of the side plate. In correspondence with the joint, the side member 5 is welded to the underside of the side plate. The side flaps 7 and 8 of the side member, which run along its entire length, are placed against the side plate and welding is performed on these. The welding of the flap 7 towards the central hood can be performed with the welding between the hood and side plate. The side member extends for an appropriate length and can be provided with flaps 4 at the ends for securing it to other parts of the cab. Other similar reinforcements are usually fitted to other parts of the floor as required.

Although the method outlined above is frequently used to produce box-type structures, it involves many complex production operations, and the joining of a large number of parts, which must first be stored and handled. It is therefore desirable to produce box-type structures, in particular components of the cab or passenger compartment for a motor vehicle and more in particular for a truck, close to the joints between two plates, that are cheaper to produce and result in savings in terms of the number of operations and materials that are required.

### SUMMARY

The problems described above have now been solved according to the present invention with a manufactured product comprising a first and a second plate, partially overlapping and joined together in the area in which they overlap, characterized in that at least said first plate is provided, in the overlapping area with a portion that is formed so as to create, in cooperation with the second plate a box-type structure.

Partially overlapping means that each of the two plates has a portion of its surface that exceeds the surface of the other, or that both faces of each plate are in part exposed by each side of the manufactured product. Said portion may have a substantially concave profile, preferably U-shaped, with the concave part towards the second plate. Said portion is preferably arranged so as to be substantially parallel to the edges of the plates in the area in which they overlap. The plates are preferably joined together by means of welding, more preferably spot welding. Said plates are preferably joined at both sides of the formed portion.

According to one aspect of the invention both plates are provided with a portion as described above.

The invention also relates to a part of the cab or passenger compartment of a vehicle, such as a motor-car, bus, train carriage, etc., preferably a cab for a truck, more preferably a floor or a wall of a cab for a truck comprising a manufactured product as described above.

Another purpose of this invention is to describe a method for the production of a manufactured product comprising a box-type structure comprising:
producing on a first plate a portion that is formed so as to create, in cooperation with a second plate, said box-type structure;
partially overlapping said first and second plates in correspondence of said portion;
joining together of said first and second plates, preferably by means of welding, more preferably by means of spot welding.

Said portion is preferably created during the plate forming process.

The invention relates in particular to that set forth in the appended claims.

### LIST OF DRAWINGS

The present invention will now be illustrated through a detailed description of the preferred, but not exclusive embodiments, provided merely by way of example, with the aid of the drawings attached hereto, in which:
figure 1 (described previously) is a schematic diagram of a perspective view of a part of a floor of a cab for a truck according to the prior art;
figure 2 (described previously) is a schematic diagram of a cross-section of a part of a floor of a cab for a truck according to the prior art;
figure 3 is a schematic diagram of a perspective view of a part of a floor of a cab for a truck according to the present invention;
figure 4 is a schematic diagram of a cross-section of a part of a floor of a cab for a truck according to the present invention;
figure 5 is a schematic diagram of a cross-section of a part of a floor of a cab for a truck according to another aspect of the present invention;
figures 6 and 7 are schematic diagrams of a cross-sectional plan, of a part of the rear wall of a cab for a truck according to the prior art and the present invention respectively.

### DETAILED DESCRIPTION OF A PREFERRED EMBODIMENT

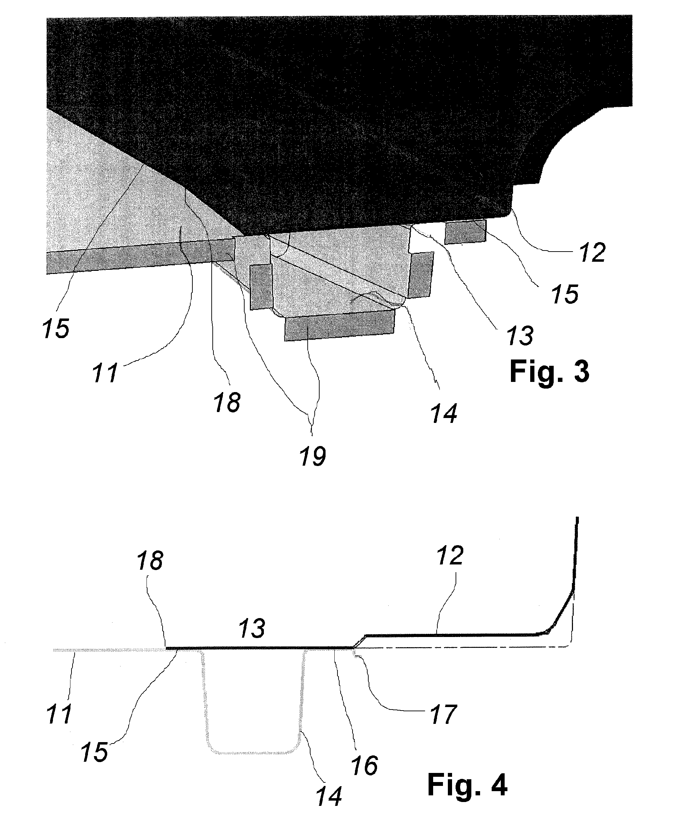

Figures 3 and 4 relate to a part of a floor of a truck according to the present invention; it is provided with a box-type structure that is created between a first 11 and a second 12 plate that are joined together in the area 13 in which they overlap; the first plate constitutes one of the side plates of the floor, the second the raised hood in the centre of the cab, in the same way as described above. The plates are joined together, for example by means of welding in the contact areas 15 and 16, the portion 14 of the first plate or side plate has a U-shaped profile closed by the portion of the second plate that overlaps the first. This creates a tubular structure that forms the box-type structure. It advantageously replaces the side member that was previously fitted to one of the plates to create the longitudinal reinforcement parallel to the joint between the two plates, and runs parallel to the edges 17 and 18 of the plates in the area in which they overlap. Structures, such as the flaps 19 for attaching the plates to other structures, may be provided. Other conventional methods can be used, for example the edge 17 may be provided with the fold shown in figure 3 to prevent the spreading of cracks caused by the blanking process. The thickness of the plates can be appropriately selected. If deemed necessary, for example in order to strengthen the formed portion, the plates can also be of different thicknesses, for example they may be made as tailor blanks, in which plates of different thicknesses are welded along the edges, before forming the plate. As mentioned previously, the formed portion can be obtained by forming, for example during the forming of the entire plate. Other reinforcement structures can also be fitted to the plates using conventional methods where necessary. The dimensions of the formed portion are similar to those used in the prior art.

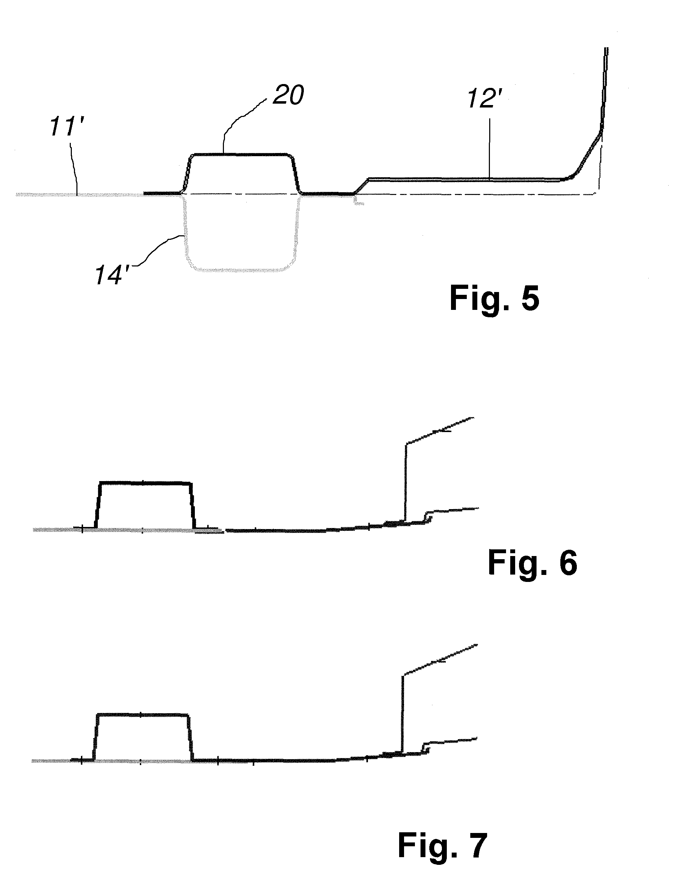

As previously said, the second plate may also be provided with a formed portion in correspondence with the first plate, with the concave part towards the first plate, so as to cooperate with the formed part of the first plate to create the box-type structure and determine the dimensions thereof; figure 5 illustrates a possible solution of this type, again applied to the floor of a truck. According to this solution the second plate 12' is also provided with a portion 20 with a U-shaped profile, opposite the similar portion of the first plate 11' and having the same width. With this solution it is possible to reduce the depth of the formed portions, to facilitate forming, or to solve specific problems concerning the amount of space that is available, without reducing the flexural strength or resistance to torsional stress of the section.

The invention is particularly suitable for use in the field of vehicle cab construction, for example cabs for trucks; figures 6 and 7 illustrate a cross-section of a rear wall of a cab for a truck, comprising a joint between two plates, with the application of a reinforcing section, manufactured according to the prior art (figure 6) and according to the present invention (figure 7).

As can be seen, the manufactured product and the method according to the present invention allow considerable savings to be made in terms of the materials that are used and simplify the operations involved in production.

As previously mentioned, the plates are preferably joined together by means of spot welding, but any suitable method can be used, such as other types of welding or glueing by means of suitable products for use in the production of motor vehicles.

## Claims

1. Manufactured product comprising a first (11, 11') and a second (12, 12') plate, partially overlapping and joined together in the area (13) in which they overlap, **characterized in that** at least said first plate is provided, in the overlapping area (13), with a portion (14) that is formed so as to create, in cooperation with the second plate a box-type structure.

2. Manufactured product according to claim 1, **characterized in that** said portion has a substantially concave profile, with the concave part towards the second plate.

3. Manufactured product according to claim 2, **characterized in that** said portion has a substantially U-shaped profile.

4. Manufactured product according to any of the previous claims, **characterized in that** said portion is arranged so as to be substantially parallel to the edges (17, 18) of the plates in the area where they overlap.

5. Manufactured product according to any of the previous claims, **characterized in that** the plates are joined together by means of welding, preferably spot welding.

6. Manufactured product according to any of the previous claims, **characterized in that** the plates are preferably joined at both sides (15, 16) of the formed portion.

7. Manufactured product according to any of the previous claims, **characterized in that** both plates are provided with a portion (14', 20) such as to create, in cooperation with one another, a box-type structure.

8. Part of the cab of a vehicle comprising a manufactured product according to any of the previous claims.

9. Floor of a cab for a truck according to claim 8.

10. Wall of a cab for a truck according to claim 8.

11. Method of production of a manufactured product comprising a box-type structure comprising:
producing on a first plate a portion that is formed so as to create, in cooperation with a second plate, said box-type structure;
partially overlapping said first and second plates in correspondence of said portion;
joining together of said first and second plates.

12. Method according to claim 11, **characterized in that** the plates are joined together by means of welding, preferably by means of spot welding.

13. Method according to claim 11 or 12, **characterized in that** said portion is obtained by means of forming.
